# EUROPEAN PATENT APPLICATION

(11) **EP 3 456 777 A1**
(43) Date of publication of application: **20.03.2019**
(21) Application number: 17191798.2
(22) Date of filing: 19.09.2017
(51) Int. Cl.: C08L 23/14, G10K 11/16

(54) **LOW VISCOSITY NOISE ATTENUATING MATERIAL FOR AUTOMOTIVE TRIM PARTS**

(71) Applicant: Autoneum Management AG, 8406 Winterthur (CH)
(72) Inventor: Merrien, Raphael, 8408 Winterthur (CH); Berger, Yann, 8406 Winterthur (CH)

(57) **Abstract**

An injection moulded noise attenuating layer for an noise insulating trim part comprising a thermoplastic elastomeric material and an inorganic filler content of at least 50% by weight, preferably between 60 and 85%, based on the final material composition characterised in that the injection moulded noise attenuating layer has a melt volume index (MVI) of between 100 and 500 cm³/10min, preferably between 150 and 350 cm³/10min, more preferably between 175 and 225 cm³/10min measured according to current ISO 1133-1.

## Description

### Technical Field

The invention is directed to a noise attenuating material for an acoustic noise attenuating trim part for a vehicle, the use of such noise attenuating material in an automotive trim part and method of producing such a trim part.

### Background Art

Noise attenuating automotive trim parts may be based on different principles like for instance a spring mass concept or a damping concept. The noise attenuation may be based on the use of an airtight elastomeric layer eventually filled to increase the density, for instance to form a mass layer in a mass-spring acoustic vehicle trim part like an inner dash.

Examples of such elastomeric layers can be found in for instance WO 2015/135815 disclosing a barrier layer based on an ethylene polymer mixture preferably containing LLDPE or LDPE and with filler content of between 35% and 90%. The material disclosed can be formed by standard methods, into the thickness and shape desired. However the material and current processes do not allow for thickness variation or the freedom to form a 3D shape.

The disadvantage of this and comparable materials is the high viscosity of the material at the temperature the material is further processed. This increases the pressure necessary for forming of the final product, increasing the cost of production machines.

An alternative way of applying this type of material was developed as coating solutions that are sprayed directly on the trim part surface. This enables a variable thickness of material, but the quality obtained may not rise to the expectations. In particularly, the drying times are higher and the process is complex. Barrier layers for spray formulations may be thermoset materials based on reacting substances and solutions with more volatile solvants to decrease drying times.

Heavy layer, also known as mass or barrier layer, is generally made of a thermoplastic elastomeric material comprising a high amount of fillers. These layers may be produced as a sheet layer through calendaring. The sheets are cut into shape and or size and formed using a vacuum forming process into the final shape eventually together with additional layers, like the decoupling layer. The process of which comprises multiple steps and it is difficult to achieve variable thickness. Process adjustments to obtain variable thickness that have been proposed in the past, such as adding additional patches on top or using an embossing calander, are still laborious and not efficient.

One process proposed is the combination of extrusion and compression moulding. As the material composition is still the same or similar to the one used for the calendared solution the compression forces needed are high. The combined process of injecting and compressing is needed to fill the full cavity, including remote areas and smaller details. Therefore, the material is pushed during cooling, increasing the risk of streaking and pairing half solidified areas. These areas may by prone to cracking or breaking during the moulding step of the final part as well as during the use of the part in the car. The mould is open during filling and closed later in the process, to increase the pressure pushing the material to the corner of the form.

It is the object of the invention to provide for an alternative noise attenuating layer enabling easier process conditions, decreasing the cost of production and the wear of the machines. However maintaining the requirements of the product, when used as a barrier in a spring mass acoustic system for an automotive trim part.

### Summary of invention

The object of the invention is achieved by a noise attenuating layer for an noise insulating trim part according to claim 1, the use of such a noise attenuating layer according to claim ... and the production of such noise attenuating layer according to claim ....

In particularly by a noise attenuating layer for an noise insulating trim part comprising a thermoplastic elastomeric material and an inorganic filler content of at least 50% by weight, preferably between 60 and 85%, and based on the final material composition having an overall melt volume index of between 100 and 300 cm³/10min., preferably between 150 and 250 cm³/10min., more preferably between 170 and 220 cm³/10min. Melt volume index as measured at 190°C according to the ISO1133-1 from 2012.

### The noise attenuating material

The injection moulded noise attenuating material according to the invention comprises of a thermoplastic elastomeric material (TEM) and inert filler material (IFM).

In this application all % are defined as % by weight based on the total weight of the injection moulded noise attenuating layer unless otherwise specified.

The inert filler (IFM) is preferably one of Barium Sulphate (BaSO₄ or Calcium Carbonate (CaCO₃). The Barium Sulphate filler used preferably has a median particle size d50 of between 20 and 30 micron. While the median particle size d50 for Calcium carbonate is preferably between 5 and 15 micron.

The injection moulded noise attenuating layer according to the invention comprises at least 50% by weight, preferably up to 85% by weight of IFM. Depending on the filler content the density of the final material is set.

A denser material is preferred as the layer needs less space. The weight of the mass layer is important for the noise attenuation, therefore the area weight hence the density can be used to tune the part.

Advantageously the viscosity of the material during production enables a high level of possible variance in the thickness distribution throughout the part, giving rise to a variable mass distribution. The variance in mass distribution is an advantage for the design of the part, having enough mass in the areas where a high acoustic insulation is needed and having none of a low mass in those areas where acoustic insulation is not necessary. The injection mould can even allow for areas without the noise attenuating material leaving gaps or holes for instance for areas of pass through, like for instance in the area of the foot pedals or where cables are going through the part.

However the injection moulded material can also be made in a precise thickness due to the closed mould with specified thickness profile, contrary to the state of the art calendaring methods where there may be a huge variance in the actual thickness obtained even if a constant thickness was the aim.

Preferably the thickness of the injected moulded layer is between 0.7-5mm, preferably between 1.5-3.5mm.

Surprisingly due to the injection moulding of the barrier material having a low MFI it is possible to obtain a very thin and precise thickness area weight distribution. In particularly it becomes possible to produce layers in the thickness area weight requirements more precisely than with state of the art material process combinations. Even in the lower thickness areas of around 2 to 3 mm, it is possible to stay within a narrow tolerance.

The thermoplastic elastomeric material (TEM) comprises of a Component A, at least one component B, and optionally additional additives.

Component A consists of a propylene ethylene copolymer, preferably with a random ethylene distribution, with a viscosity at 190°C of between 7000 and 8000 mPas, preferably between 7430 and 7800 mPas. Preferably the copolymer used is not a block polymer. Preferably the injection moulded material comprises at least 7% by weight of component A, preferably between 10 and 25%. A commercial example of component A may be for instance Vistamaxx from Exxon.

Component B consist of at least one of a partially amorphous polyolefin (Component B1), preferably an amorphous poly-alpha-olefin, or a reactor based thermoplastic polyolefin with a melt flow index at 230°C of between 17 and 35 g/10min (Component B2). Preferably component B comprises component B1 and B2.

A commercial example of component B1 may be for instance APAO Vestoplast, while an example for component B2 may be for instance Adflex.

Preferably the injection moulded material comprises between 2% and 13% by weight of component B, preferably between 4 and 8%.

Preferably component B comprises of component B1 and B2 in a ratio of between 1.2 and 2.0 (B1/B2) .

A commercial example of component A may be for instance Vistamaxx from Exxon.

TME may further comprise other additives like organic or inorganic oil, preferably one of paraffin oil or rosin oil. TME may further comprise at least one of a dye additive, like carbon black, a thermal stability additive, like a high melt polypropylene, a flame retardant additive, a miscibility enhancing additive, or a mould release enhancing additive.

Preferably the injection moulded material does not comprise more than 6% by weight of these other additives including optionally oil.

Preferably the oil component may be up to 4% by weight of the injection moulded material.

IFM and TEM form together 100% by weight of the noise attenuating material according to the invention, having a MVI of between 100 and 500 cm³/10min, preferably of 150 and 350 cm³/10min, more preferably 175 and 225 cm³/10min. The thus material formed has preferably a Young's modulus of between 10 and 80 MPa. Preferably combined with a shore hardness of between 70A and 95A.

Surprisingly the noise attenuating material layer according to the invention has a low viscosity and still the high required filler content, giving a material that can be easy processed, and that is flexible enough to function as an elastomeric layer in for instance an acoustic mass-spring system, without breaking or crumbling.

Furthermore surprisingly the noise attenuating material obtained when heated before final injection moulding is very liquid despite the high content of inert filler, however is able to provide a flexible and soft enough material to form a stable noise attenuating layer when used in the car.

Preferably the noise attenuating material when injection moulded into the final shape in the form of a sheet, layer, patch or similar (afterwards referred to as layer) to be used in a vehicle trim part has a melting temperature of at least 80°C, preferably at least above 100°C, more preferably above 120°C.

The noise attenuating material layer according to the invention may have an area weight of at least 0.5 kg/m², preferably at least 1 kg/m². Preferably not more than 10 kg/m².

The density depending on the filler content may be at least 1.3 kg/m³, preferably not more than 2.5 kg/m³.

### Trim part including the noise attenuating material

The noise attenuating material according to the invention is injection moulded in a closed mould formed with a first half and a second half together enclosing a space in the final shape of the injection moulded material layer. This can be in the form of a layer, patch or sheet in the required form and thickness to be used. The part formed may be used either as a single layer trim part, or combined locally or fully on the surface of at least a second layer to form a noise attenuating trim part.

A single mould might also include multiple patches together forming the inlay for a noise attenuating trim part or trim parts. Preferably injection moulded patches, parts or layers might be used without further treatment or may be trimmed.

The noise attenuating material can be used on its own for instance to reduce vibrational damping of a surface, preferably the material is adhered to the surface of the area to be dampened for instance by using magnetic means or by applying a glue layer. Preferably the filler of the noise attenuating material comprises magnetic inert filler.

The noise attenuating material may also be used in a trim part with at least one additional layer. The additional layer is adhered over substantially its entire surface with the surface of the noise attenuating layer or patch.

Preferably, the at least one additional layer is one of a decoupling layer, fibrous felt layer, foam layer or carpet system.

In case the additional layer is a decoupling layer, the decoupling layer is placed on the surface of the noise attenuating material layer facing away from the interior of the car. While the decoupler may be in contact with at least one surface vibrating and radiating noise. The noise attenuating material will take the function of a barrier or mass layer in an acoustic mass-spring insulating system.

The decoupling layer can be at least one of a fibrous felt layer or a soft foam layer.

The fibrous felt layer used as the at least one additional layer as just defined comprises of a binder and fibers, or fibers alone. The binder can be any type of material that can melt or cure during moulding and bind the fibers together to form a consolidated fibrous layer. The binder can be any type of thermoplastic or thermoset binder, like phenolic or epoxy resin or derivatives of such resin.

Alternatively or additionally the felt layer can be consolidated by a mechanical process known in the art, for instance needling.

The binder can be applied in the form of powder, flakes or fiber.

As thermoplastic binder preferably at least one of the materials selected form the group consisting of polyester, preferably polyethylene terephthalate, polyolefin, preferably polypropylene or polyethylene, polylactic acid (PLY) and polyamide such as polyamide 6 or polyamide 66, or any of their copolymers may be used.

For example as binder a low melt polyester or polyolefin with a melt point lower than the filler fibers can be used. Preferably bi-component fibers might be used for instance a core sheath type of fiber with the sheath forming the binder component and the core forming the fiber felt material. For instance a coPET/PET bicomponent fiber whereby the coPET forms the binder and the PET forms the fibers within the felt material after moulding.

Preferably at least 0-50% by weight of the final felt material is formed by binder, preferably 10-40%, and even more preferred 20-30% by weight. The binder is preferably applied in the form of fibers.

The fibers used might be staple fibers or endless filaments. If the word fibers is used both staple fibers and endless filaments are meant except if the type of fibers is explicitly mentioned.

The fibers comprise at least one of natural fibers, like cotton, mineral fibers, like glass or basalt fibers, or man-made fibers, like polyamide (nylon) such as polyamide 6 or polyamide 66, polyester such as polyethylene terephthalate (PET) or polyolefin such as polypropylene or polyethylene or mixtures thereof.

The fibers might come from a virgin, reclaimed or recycled source, for instance in the form of shoddy material, preferably shoddy cotton, synthetic shoddy, polyester shoddy or natural fiber shoddy.

Reclaimed fibers are preferably produced from textile fabrics. The shoddy type is defined by having at least 51% by weight of the material included, 49% can come from other sources. So for instance shoddy polyester contains at least 51% by weight of polyester based materials. Alternatively the shoddy material can be a mixture of different synthetic and natural fibers, whereby not one type is prevailing.

The fibers may also come from regenerated sources, like for instance regenerated polyester.

The fibers used for the at least one additional layer, in particularly the decoupling layer, may have a solid cross section or hollow cross section, or a combination of fibers with a hollow and solid cross section might be used. For instance to further enhance the durability and or to obtain a lighter part.

Surprisingly the use of a combination of fibers including frizzy fibers for instance hollow conjugate curled fibers further enhances the loftiness and softness of the decoupling layer and the acoustic performance of the overall moulded floor covering system.

In case of staple fibers used for the decoupling layer they have preferably a fiber length of between 28-76mm, preferably between 32-64 mm.

The fibers - staple fibers or endless filaments, used for the at least one additional layer, in particularly the decoupling layer, are preferably between 1.7 and 28 dtex, preferably between 3 and 15 dtex, preferably between 3 and 12 dtex.

Eventually foam chips might be added to the additional layer or layers based on fibrous felt. Preferably up to 30%, more preferably up to 25% of the total area weight of the layer might be foam chips or shredded foam. Preferably the foam is based on polyurethane foam, preferably soft polyurethane foam. The density of the foam used is preferably between 10 and 100 kg/m³, preferably between 20 and 90 kg/m³. The size of the shredded foam pieces or chips is preferably between 2 and 20 mm, preferably between 3 and 15 mm.

Preferably the at least one additional layer has an area weight of between 80-2500 g.m⁻², preferably up to 1200 g.m⁻² preferably up to 1000g.m⁻².

The at least one additional layer after moulding might be having a constant area weight or a constant density. The thickness and or area weight might also vary over the surface depending on the final shape and acoustic requirements.

The fibrous layer might be produced according to known processes for instance using the process of carding, cross lapping and needling or the alternative process of air laid and eventually needling to produce a consolidated fibrous mat the mat can be cut in blanks to be used in the moulding process. Alternatively the fibrous material can be directly laid into a mould and consolidated for instance using the device for moulding fibrous material as disclosed in EP 2640881.

Also a standard open cell foam material may be used as the at least one additional layer according to the invention. The additional layer may be formed from any type of thermoplastic or thermosetting foam. Preferably the decoupling layer is made of polyurethane foam.

Preferably the foam has a density between 25 to 100 Kg/m³, preferably 35 to 80 Kg/m³, preferably 45 to 70 Kg/m³.

The additional layer, in particularly if it functions as a decoupling layer, has preferably a low compression stiffness of less than 20 kPa, preferably above 4 kPa, preferably between 5 and 15 kPa, preferably between 5 and 10 kPa, measured according to the current ISO 3386-1. The measured stiffness is the compression stress value CV40, also called CLD40 value, measured at 40% compression.

The foam can be produced in foam blocks and cut in layers with the right thickness to be moulded to the final part. Alternatively, it may be applied according to the reaction injection moulding process whereby the foam is directly reacting in the mould forming the final shape. Preferably it is attached to the thermoplastic elastomeric layer during injection moulding of the foam.

The thickness and stiffness of the at least one additional layer, in particularly the decoupling layer, independent of the material chosen may be optimised to meet acoustic and stiffness targets as well as overall rigidity requirements of the trim part. In addition the thickness is dependent on space restrictions in the vehicle. Preferably the thickness can be varied over the area of the part to follow the available space in the vehicle. The thickness available may vary between 1 and 100 mm but in most cases the thickness varies between 5 and 40 mm. For instance typical overall average thickness of a decoupling layer of a carpet or inner dash is between 15 and 25mm, e.g. in average about 20mm.

One option is to directly back foam polyurethane against the noise attenuating layer or against patches using a reaction injection moulding process to form a foam layer adhered to the noise attenuating layer or patch. The foam may be used as the decoupling layer or alternatively an open cell foam layer may be functioning as a noise absorbing layer facing towards the relevant source of noise. Alternatively foam is applied on both sides forming an insulating and absorbing acoustic trim part. For instance for an inner or outer dash cladding. The noise attenuating material layer might have small holes to enable the flow of foam to both sides and a good bonding of the overall structure.

The noise attenuating material might be injected directly on the at least one additional layer, preferably on an additional layer in the form of fibrous felt or foam as defined before. This can be on the full surface, as patches on top of the material and or in predefined recesses in the additional layer.

Pre-defined recesses can be made during the pre-shaping of the additional layer.

Other layers may be placed on the additional layer and or on the surface opposite the first additional layer, like for instance layers comparable to the one already defined as additional layer, or at least one of a film layer, like a single or dual layer film, scrim layer, or an aesthetic surface layer, like a tufted or nonwoven carpet or textile, of combinations of such layers.

Preferably the first additional layer or the additional layer is a fibrous felt layer with the fibers bound on binding points with a thermoplastic binder forming a consolidated fibrous layer. In particularly in the case of back injection moulding the noise attenuating material a consolidated layer is preferred.

The acoustic attenuating trim part according to the invention comprising at least the noise attenuating material comprising a thermoplastic elastomeric material and an inorganic filler content of at least 50% by weight, preferably between 60 and 85%, and based on the final material composition having an overall melt volume index of between 100 and 300 cm3/10min., preferably between 150 and 250 cm3/10min., more preferably between 170 and 220 cm3/10min and at least one additional layer may be used as or in an inner or outer dash, a petrol or electric engine cover or side panels, as part of a flooring system, as trim part or cladding in the trunk, headliner or passenger compartment. Preferably it is used combined with a decoupling layer of one of a soft foam or felt, to be used as a mass spring system for noise attenuation, for instance as an innerdash or flooring system, eventually combined with deco surface layer, like scrims, nonwoven, needlepunch or flocked carpets or other types of decorative coverings.

### Process

A preferred process of the noise attenuating material according to the invention comprises at least the steps of
- mixing and heating the material mixture comprising at least the thermoplastic elastomeric material and the inert filler, preferably until a melt volume index (MVI) of between 100 and 500cm³/10min , preferably between 150 and 350cm³/10min , more preferably between 175 and 225cm³/10min is obtained;
- Injecting the molten material in a closed mould, optionally directly on an additional layer or layers like in the form of a pre-shaped fibrous web;
- after at least partly cooling the part removing it from the mould.

A compression step is not foreseen, or deemed necessary.

Due to the low MVI it is possible to fill also a mould with more intricate shapes without the need for additional pressure to distribute the material; this has the advantage that thinner walls can be achieved. Designs with thinner areas are now possible without the problems related to high pressure and high tonnage.

The material obtained may be directly formed in the relevant shape for the acoustic part to be produced. Alternatively the material is mixed and formed in pellets which are later fed in an injection moulding machine for injection moulding the parts. However, forming directly the required final shape is preferred as it eliminates additional production steps.

The material has the advantage that it is flexible and will not crumble or stick to other parts, making storing and transport easier.

Preferably the noise attenuating has a variable thickness and or variable area weight over the surface of the material layer. The variable thickness and or variable area weight allows to optimise the acoustic performance of the trim part as well as reducing the weight of the noise attenuating layer by reducing the thickness of the material in areas where this is suitable without impairing the overall acoustic performance of the trim part. The noise attenuating material may also be produced such that there are areas without noise attenuating material, for example holes in the noise attenuating trim part.

Preferably the final noise attenuating material has a shore A hardness in the range of between 70A and 95A. Preferably the noise attenuating material may have additionally an E-modulus between 10 and 80 Mpa. (The E-modulus as measured according to ISO527-2/5/100 using a test speed of 100mm/min and a clamping distance of 80mm.) Ensuring an optimal softness and flexibility required for an optimised acoustic layer.

### Figures

Figure 1 is a schematic cross-sectional view of a car with a car part containing a noise attenuating material layer according to the invention.
Figure 2 shows schematic cross-sectional view of an injection mould with the noise attenuating material according to the invention.
Figure 3 shows a preferred embodiment of injection moulded noise attenuating material directly moulded on top of the surface of a porous layer.

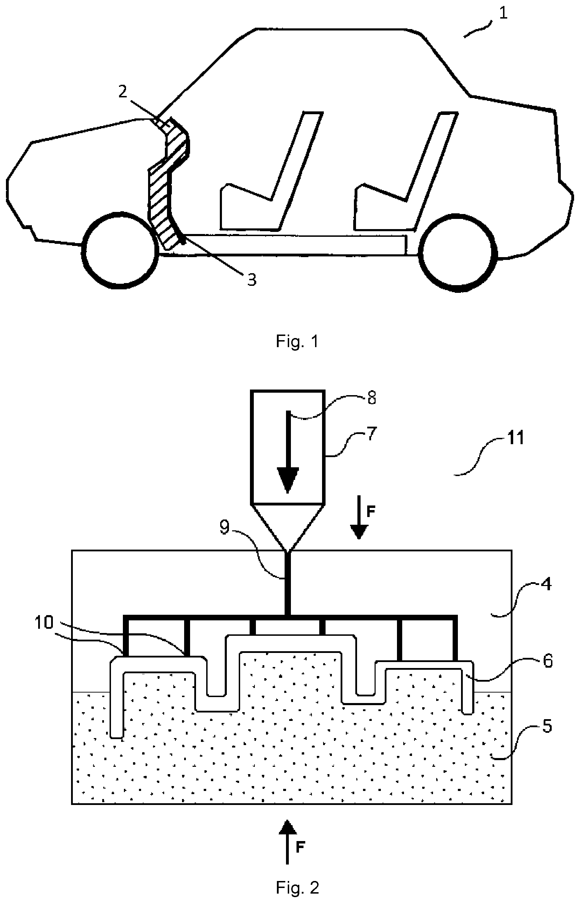

Figure 1 is schematic cross-sectional view of a car (1). To attenuate noise coming from the engine bay area and entering the passenger compartment via the wall between the engine bay area and the passenger compartment a dash trim part, also called inner dash trim part or cladding, may be placed against the partition wall either on the insight of the passenger compartment as shown or the other way around in the engine bay area, normally called outer dash trim part. The trim part comprises at least of 2 layers a decoupling layer (2) facing the car body and the noise attenuating layer according to the invention (also called barrier or heavy layer) (3) facing the passenger compartment. Additional layers, not shown, may be present, for example additional absorbing layers, carpet or decorative layers preferably placed on the surface of the noise attenuating facing away from the partitioning wall.

Such an acoustic trim part might also be placed in other areas to attenuate vibrational noise, for instance on the main floor area in the passenger compartment partly under the seat of the passengers.

Figure 2 shows schematic cross-sectional view of an injection mould (11) and an example of noise attenuating (6).

The thermoplastic compound is mixed and heated in a unit (7) before it is fed by low pressure force into the mould tool, for example by a screw-type plunger (8). The compound enters the mould hot runner system (9) and is moved by pressure to the injectors (10), may also be referred to as injector nozzles, and then into the mould cavity where the noise attenuating (6) is formed under pressure (F). The moulds upper part (4) and a lower part (5) remain closed during the moulding process.

### Example 1

Noise attenuating material is mixed comprising 68% of filler; 19% of component A and 7.0% of component B formed by a mix of component B1 and B2 in a ratio of 1 to 1.8 and heated ready for injection into a mould. Other additives as disclosed were added to obtain 100%.

A mould is formed from 2 mould halves with a cavity in the form of the requested noise attenuating part or parts. The mould is fully closed for the start of the injection. Eventually venting points are integrated for the escape of trapped air. The injection can be done by single or multiple injection points.

The material is injected in the mould and after a predefined cooling time the mould is opened and the part eventually taken out of the mould.

Alternatively at least one additional layer is introduced in the mould such that the noise attenuating material can be injected directly against the surface on predefined areas of the additional layer or for full coverage. Preferably the additional layer is only taking in some of the injected material to obtain a bonding between the surface of the additional layer and the injected material. Preferably the injected material is not able to pass through the full thickness of the additional layer to prevent leaking and stains on the outer surface.

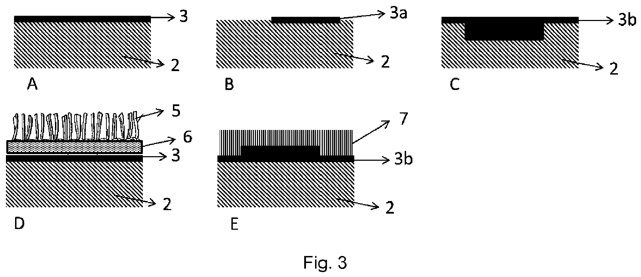

Figure 3 A to E are showing different layouts integrating the noise attenuating material according to the invention.

Figure 3A to 3C shows dual layer trim parts with the noise attenuating material according to the invention 3, in the form of a full layer 3, a patch 3a or a full layer partly increased in thickness due to a recess (or recesses) formed in either the mould or in the additional layer 2.

The additional layer can be foam or felt layer in the different variances as disclosed previously. In case the additional layer is touching a surface of the car the dual layer product will function as an acoustic mass spring system with the noise attenuating material layer working as the mass, barrier or heavy layer and the additional layer will work as the spring or decoupling layer.

A product as such can be placed against a floor or a wall of the vehicle, like for instance the body in white or the partitioning wall between passenger compartment and engine bay. The product formed can be an acoustic trim part or cladding, for instance the inner or outer dash, the floor or the trunk.

Figure 3D is showing the same layers as already described in fig 3 A to C. With at least the noise attenuating material layer (3) and a first additional layer (2), further comprising an additional carpet system build with a layer 6 being a second backing layer or optionally an air flow resistive backing layer and in addition a tufted surface layer (5) alternatively a nonwoven top layer can be used (not shown), together forming a carpet system. The noise attenuation layer (3) is shown here as a full covering layer however also the variant of 3a and 3b can be used here to further reduce the overall weight and/or to optimise the acoustic performance of the final trim part. This type of trim parts can be used for instance for the main floor, the inner dash or the trunk.

Figure 3E shows a classical absorber barrier absorber system with the barrier made of the noise attenuating material according to the invention and first and second additional layer (2 and 7) whereby the top layer (7) might be different than the backing layer (2). Both layers might be made with foam and or felt and at least the top layer facing towards the open space is pervious to air, preferably with an air flow resistance of between 200 and 5000Nsm⁻³, preferably between 500 and 3000Nsm⁻³. The noise attenuating material and the first additional layer (2) will mainly insulate noise while the additional top layer (7) will in addition absorb noise.

## Claims

1. An injection moulded noise attenuating layer for an noise insulating trim part comprising a thermoplastic elastomeric material and an inorganic filler content of at least 50% by weight, preferably between 60 and 85%, based on the final material composition **characterised in that** the injection moulded noise attenuating layer has a melt volume index (MVI) of between 100 and 500 cm³ /10min , preferably between 150 and 350 cm³/10min, more preferably between 175 and 225 cm³/10min measured according to current ISO 1133-1.

2. An injection moulded noise attenuating layer according to claim 1 whereby the injection moulded noise attenuating layer has a Young's modulus of between 10 and 80MPa, preferably between 20 and 40MPa.

3. An injection moulded noise attenuating layer according to claim 1 or 2, whereby the thermoplastic elastomeric material comprises at least 7% of a propylene ethylene copolymer, preferably with a random ethylene distribution with a viscosity at 190°C of between 7000 and 8000 mPas, preferably between 7430 and 7800 mPas.

4. An injection moulded noise attenuating layer according to one of the preceding claims, whereby the thermoplastic elastomeric material comprises at least one of a partially amorphous polyolefin (component B1), preferably an amorphous poly-alpha-olefin, or a reactor based thermoplastic polyolefin with a melt flow index at 230°C of between 17 and 35 g/10min (component B2).

5. An injection moulded noise attenuating layer according to claim 4 whereby the thermoplastic elastomeric material comprises component B1 and B2 in a weight ratio of 1.2 to 2.0.

6. An injection moulded noise attenuating layer according one of the preceding claims, whereby the inorganic filler is at least one of Barium Sulphate or Calcium carbonate.

7. An injection moulded noise attenuating layer according to one of the preceding claims further comprising an organic or inorganic oil, preferably one of paraffin oil, rosin oil,

8. An injection moulded noise attenuating layer according to one of the preceding claims further comprising at least one of a dye additive, like carbon black, a thermal stability additive, a flame retardant additive, a miscibility enhancing additive, a mould release enhancing additive.

9. An acoustic attenuating trim part for a car comprising at least a mass layer and a decoupling layer whereby the decoupling layer is formed by the injection moulded noise attenuating layer according to one of the preceding claims.

10. An acoustic attenuating trim part according to claim 9 whereby the decoupling layer has a variable thickness in the direction perpendicular to the surface of the material.

11. An acoustic attenuating trim part for a vehicle comprising at least a first layer or patch being an injection moulded noise attenuating layer according to one of claims 1 to 8, and at least one additional layer chosen from an open or closed cell foam layer, a porous fibrous layer, a scrim layer or textile layer, whereby the layer or patch is at least partly injection moulded in a recess or recesses of the at least one addition layer.

12. Method of producing the noise attenuating layer of one of the claims 1 to 8, comprising at least the consecutive steps of:
A. Compounding by mixing and heating at least the binder and the filler to a compound with a MVI of at least 100 cm³/10min, preferably of between 150-350 cm³/min, more preferably between 175 and 225 cm³/10min;
B. Low pressure injecting the molten compound in a mould to form the noise attenuating.

13. Method according to claim 9 comprising an additional step of cooling, pelletizing and reheating the compound between step A and B.
